# DEMANDE DE BREVET EUROPEEN

(11) **EP 4 310 035 A1**
(43) Date de publication de la demande: **24.01.2024**
(21) Numéro de dépôt: 22306086.4
(22) Date de dépôt: 21.07.2022
(51) Int. Cl.: B65G 47/71, B65G 47/26, B30B 15/32, B65G 47/84, B65G 47/82, B65G 47/88, B65G 47/64

(54) **SYSTÈME, ENSEMBLE ET PROCÉDÉ DE SÉPARATION D'UN FLUX DE TABLETTES COMPACTÉES PAR UN DISPOSITIF DE COMPACTION**

(71) Demandeur: Bonals Technologies, 42170 Saint Just Saint Rambert (FR)
(72) Inventeur: Palmier, Hervé, 42600 ESSERTINES EN CHATELNEUF (FR)
(74) Mandataire: Regimbeau

(57) **Abrégé**

L'invention porte sur un système de séparation d'un flux de tablettes compactées par un dispositif de compaction, comprenant :
- une ligne d'entrée (10) ;
- deux lignes de sortie (31 ; 32 ; 33) ;
- un dispositif d'accumulation (20) de tablettes entre la ligne d'entrée (10) et les lignes de sortie (31 ; 32 ; 33), le dispositif d'accumulation (20) comprenant une ligne d'accumulation (21) de tablettes et un ensemble de régulation (22) du flux de tablettes, l'ensemble de régulation (22) du flux de tablettes comprenant un organe de retenue des tablettes et un organe de poussée des tablettes ;
- une surface de convoyage (40) placée sous la ligne d'accumulation (21) ;
- un dispositif d'aiguillage (50) prévu pour diriger un flux de tablettes en provenance de la ligne d'entrée (10) en direction de l'une ou l'autre des lignes de sortie (31 ; 32 ; 33).

L'invention porte également sur un ensemble comprenant plusieurs systèmes de séparation et sur un procédé de séparation de tablettes.

## Description

### DOMAINE DE L'INVENTION

La présente invention concerne le domaine de la conception de tablettes à partir de mélange de composants, sous forme de poudres ou de granulés notamment. Elle porte plus spécifiquement sur un système et procédé de séparation d'un flux de tablettes ayant été compactées par un dispositif de compaction, en vue notamment d'un post-traitement de ces tablettes compactées.

### ETAT DE LA TECHNIQUE

Les dispositifs existants pour fabriquer des tablettes par compaction sont classiquement des presses rotatives dotées d'un plateau central rotatif dans lequel est ménagée une pluralité de matrices traversantes. De part et d'autre et en regard de chacune des matrices sont agencés des poinçons inférieur et supérieur complémentaires l'un de l'autre, et destinés à s'insérer dans la matrice correspondante pour venir compacter le mélange qu'elle contient afin de former une tablette compactée au volume désiré. De telles presses rotatives permettent de produire des tablettes compactées à des cadences très élevées, par exemple de l'ordre de 1500 tablettes par minutes.

Une fois que les tablettes ont été compactées, il y a régulièrement des post-traitements, c'est-à-dire des traitements de la tablette après l'étape de compaction. De tels post-traitements sont peuvent par exemple consister en des enrobages de chaque tablette compactée ou des empaquetages de chaque tablette compactée. Pour ce faire, il est généralement utilisé des dispositifs de post-traitement qui sont agencés en sortie du dispositif de compaction et permettent un traitement individuel ou groupé des tablettes compactées.

Une problématique existante de ce post-traitement est que le traitement correspondant ne peut généralement pas se faire aux cadences élevées utilisées dans le dispositif de compaction, mais à des cadences beaucoup plus faibles. Ainsi, il est obligatoire de réduire la vitesse du flux des tablettes compactées avant leur entrée dans le ou les dispositifs de post-traitement.

Une solution classiquement utilisée pour réduire la vitesse du flux des tablettes compactées et d'utiliser des dispositifs de mise au pas, permettant une réduction progressive de la vitesse du flux. A cet égard, il peut par exemple être utilisé une succession de tapis de convoyage motorisés et fonctionnant à des vitesses de plus en plus réduites jusqu'à atteindre la vitesse recherchée pour le flux de tablettes compactées. L'inconvénient de telles solutions est son encombrement puisqu'il est nécessaire d'avoir des longueurs de convoyages très grandes pour réduire sensiblement la vitesse du flux de tablettes compactées, en particulier si l'on souhaite diviser cette vitesse par 3 ou 4 notamment.

### EXPOSE DE L'INVENTION

Un objectif de la présente invention est de proposer une solution pour réduire la vitesse du flux de tablettes en sortie du dispositif de compaction en vue de post-traitement.

En particulier, un but de la présente invention est de proposer une solution de réduction du flux de vitesse des tablettes compactées qui n'impose pas des encombrements trop importants et qui peuvent donc être mis en oeuvre dans des espaces de production réduits.

En outre, un but de la présente invention est de proposer une solution de réduction du flux de vitesse des tablettes compactées qui évite une remontée des tablettes compactées dans le dispositif de compaction pour éviter un blocage de la compaction.

A cette fin, on propose un système de séparation d'un flux de tablettes compactées par un dispositif de compaction, dans lequel le système de séparation comprend :
- une ligne d'entrée configurée pour récupérer un flux de tablettes en sortie du dispositif de compaction ;
- deux lignes de sortie prévues pour évacuer des tablettes du système de séparation ;
- un dispositif d'accumulation de tablettes positionné entre la ligne d'entrée et les lignes de sortie et prévu pour une accumulation périodique d'un nombre déterminé de tablettes, le dispositif d'accumulation comprenant une ligne d'accumulation de tablettes et un ensemble de régulation du flux de tablettes, l'ensemble de régulation du flux de tablettes comprenant un organe de retenue des tablettes prévu pour permettre une accumulation des tablettes dans la ligne d'accumulation et un organe de poussée des tablettes prévu pour évacuer de manière forcée les tablettes accumulées de la ligne d'accumulation ;
- une surface de convoyage placée sous la ligne d'accumulation et prévue pour accompagner le déplacement des tablettes de la ligne d'entrée en direction des lignes de sortie ;
- un dispositif d'aiguillage prévu pour diriger un flux de tablettes en provenance de la ligne d'entrée en direction de l'une ou l'autre des lignes de sortie.

Des aspects préférés mais non limitatifs de ce système de séparation, pris seuls ou en combinaison, sont les suivants :
- l'organe de poussée est configuré pour pousser les tablettes accumulées dans la ligne d'accumulation à une vitesse d'évacuation supérieure à une vitesse de convoyage des tablettes dans ligne d'accumulation.
- le dispositif d'aiguillage comprend un organe de support sur lequel est fixé le dispositif d'accumulation, l'organe de support étant monté pivotant selon un axe de pivot orthogonal à la surface de convoyage de manière à relier la ligne d'accumulation du dispositif d'accumulation à l'une ou l'autre des lignes de sortie en fonction de la position angulaire de l'organe de support.
- le système comprend deux dispositifs d'accumulation de tablettes ayant respectivement une ligne d'accumulation placée en amont de l'une des lignes de sortie, et le dispositif d'aiguillage comprend un organe d'aiguillage monté pivotant selon un axe de pivot orthogonal à la surface de convoyage de manière à relier la ligne d'entrée à l'une ou l'autre des lignes d'accumulation des dispositifs d'accumulation en fonction de la position angulaire de l'organe d'aiguillage.
- l'ensemble de régulation comprend une première pièce allongée de régulation et une deuxième pièce allongée de régulation, les première et deuxième pièces allongées de régulation étant montées mobiles dans le dispositif d'accumulation et configurées pour s'étendre dans la ligne d'accumulation et être déplacées en translation le long de la ligne d'accumulation, les première et deuxième pièces allongées de régulation étant configurées pour former alternativement l'organe de poussée et l'organe de retenue.
- la première pièce allongée de régulation forme l'organe de poussée lorsque la deuxième pièce allongée de régulation forme l'organe de retenue, et inversement la deuxième pièce allongée de régulation forme l'organe de poussée lorsque la première pièce allongée de régulation forme l'organe de retenue.
- le dispositif d'accumulation est configuré pour un déplacement synchrone des première et deuxième pièces allongées de régulation.
- les première et deuxième pièces allongées de régulation sont montée sur un agencement de courroie s'étendant le long de la ligne d'accumulation, chacune des première et deuxième pièces allongées de régulation s'étendant perpendiculairement par rapport à une courroie de l'agencement de courroie.
- la courroie de l'agencement de courroie s'étend entre une entrée de la ligne d'accumulation et une sortie de la ligne d'accumulation, les première et deuxième pièces allongées de régulation étant agencées sur la courroie à équidistance de sorte que lorsque l'une des première et deuxième pièces allongées de régulation s'étend dans la ligne d'accumulation au niveau de l'entrée de la ligne d'accumulation alors l'autre des première et deuxième pièces allongées de régulation s'étend en dehors de la ligne d'accumulation au niveau de la sortie de la ligne d'accumulation, et lorsque l'une des première et deuxième pièces allongées de régulation s'étend dans la ligne d'accumulation au niveau de la sortie de la ligne d'accumulation alors l'autre des première et deuxième pièces allongées de régulation s'étend en dehors de la ligne d'accumulation au niveau de l'entrée de la ligne d'accumulation.
- l'organe de retenue des tablettes comprend une pièce de retenue positionnée au niveau de l'extrémité de la ligne d'accumulation du côté des lignes de sortie et montée mobile par rapport à la ligne d'accumulation de sorte à se déplacer entre une position retractée dans laquelle la ligne d'accumulation est laissée libre et une position déployée dans laquelle la pièce de retenue vient obstruer la ligne d'accumulation afin de retenir des tablettes dans la ligne d'accumulation ;
- l'organe de poussée comprend une pièce de poussée montée en translation selon une direction parallèle à la ligne d'accumulation et est en outre mobile par rapport à la ligne d'accumulation de sorte à se déplacer entre une position retractée dans laquelle la ligne d'accumulation est laissée libre et une position déployée dans laquelle la pièce de poussée s'étend dans la ligne d'accumulation, une translation de la pièce de poussée en position déployée permettant de pousser les tablettes accumulées dans la ligne d'accumulation en direction de l'une des lignes de sortie.
- le système comprend un organe de blocage agencé entre la ligne d'entrée et le dispositif d'accumulation afin de bloquer les tablettes dans la ligne d'entrée et stopper le flux de tablettes entrant dans le dispositif d'accumulation.
- l'organe de blocage comprend une pièce de compression montée mobile entre une position escamotée laissant libre la ligne d'entrée et une position déployée dans laquelle la pièce de compression vient bloquer une tablette dans la ligne d'entrée.
- la surface de convoyage comprend un tapis de convoyage entrainé par un moteur à une vitesse de convoyage.
- la vitesse de convoyage est égale à une vitesse d'entrée des tablettes dans ligne d'accumulation.
- la surface de convoyage comprend une pluralité de rouleaux adjacents montés libre en rotation sur lesquels les tablettes sont destinées à glisser, la surface de convoyage étant de préférence inclinée pour favoriser le déplacement des tablettes par utilisation de la gravité.
- la ligne d'entrée est inclinée pour favoriser le déplacement des tablettes par utilisation de la gravité.
- le dispositif d'accumulation est montée de manière escamotable par rapport à la surface de convoyage afin de permettre un accès à la surface de convoyage.

Ici et dans la suite du texte, par « au niveau de », on entend « du côté de » ou « à proximité de ».

On propose également un ensemble de séparation de tablettes comprenant plusieurs systèmes de séparation de tablettes tels que présentés ici. Les systèmes de séparation de tablettes sont de préférence positionnés en série et/ou en parallèle et sont reliés entre eux par des dispositifs de convoyage

On propose enfin un procédé de séparation d'un flux de tablettes ayant été compactées par un dispositif de compaction, comprenant les étapes suivantes :
A. récupérer dans une ligne d'entrée un flux de tablettes en sortie d'un dispositif de compaction ;
B. accumuler dans une ligne d'accumulation des tablettes en provenance de la ligne d'entrée ;
C. une fois qu'un nombre déterminé de tablettes a été accumulé dans la ligne d'accumulation :
   C1. bloquer les tablettes dans la ligne d'entrée afin de stopper le flux de tablettes entrant dans la ligne d'accumulation ;
   C2. démarrer une évacuation forcée des tablettes accumulées de la ligne d'accumulation en direction d'une première ligne de sortie ;
D. une fois que l'évacuation forcée des tablettes de l'étape C2 a démarré, débloquer les tablettes accumulées dans la ligne d'entrée afin qu'elles viennent s'accumuler dans la ligne d'accumulation ;
E. une fois qu'un nombre déterminé de tablettes a été accumulé dans la ligne d'accumulation :
   E1. bloquer les tablettes dans la ligne d'entrée afin de stopper le flux de tablettes entrant dans la ligne d'accumulation ;
   E2. démarrer une évacuation forcée des tablettes accumulées de la ligne d'accumulation en direction d'une deuxième ligne de sortie ;
F. une fois que l'évacuation forcée des tablettes de l'étape E2 a démarré, débloquer les tablettes accumulées dans la ligne d'entrée afin qu'elles viennent s'accumuler dans la ligne d'accumulation et recommencer les étapes C à F.

Des aspects préférés mais non limitatifs de ce procédé de séparation, pris seuls ou en combinaison, sont les suivants :
- l'évacuation forcée des étapes C2 et E2 comprend la poussée des tablettes accumulées dans la ligne d'évacuation à une vitesse d'évacuation supérieure à une vitesse de convoyage des tablettes dans ligne d'accumulation.
- la ligne d'accumulation peut être déplacée pour être mise en regard de la première ligne de sortie ou en regard de la deuxième ligne de sortie, et :
   ∘ avant de débuter l'étape C, on déplace la ligne d'accumulation pour la placer en regard de la première ligne de sortie ;
   ∘ avant de débuter l'étape E, on déplace la ligne d'accumulation pour la placer en regard de la deuxième ligne de sortie.
- une première ligne d'accumulation est prévue en regard de la première ligne de sortie et une deuxième ligne d'accumulation est prévue en regard de la deuxième ligne de sortie, un organe d'aiguillage permettant de relier la ligne d'entrée à l'une ou l'autre des première et deuxième ligne d'accumulation, et :
   ∘ avant de débuter l'étape B, on déplace l'organe d'aiguillage pour que la ligne d'entrée soit reliée à la première ligne d'accumulation ;
   ∘ avant de débuter l'étape D, on déplace l'organe d'aiguillage pour que la ligne d'entrée soit reliée à la deuxième ligne d'accumulation ;
   ∘ avant de débuter l'étape F, on déplace l'organe d'aiguillage pour que la ligne d'entrée soit reliée à la première ligne d'accumulation.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- La figure 1 est une vue en perspective d'un système de séparation selon un premier mode de réalisation ;
- La figure 2 est une vue de côté du système de séparation de la figure 1 ;
- La figure 3 est une vue de côté d'un dispositif d'accumulation du système de séparation de la figure 1 ;
- La figure 4 est une vue de dessus du dispositif d'accumulation du système de séparation de la figure 1 ;
- La figure 5 est une vue en perspective du dispositif d'accumulation du système de séparation de la figure 1 ;
- Les figures 6 à 10 sont des illustrations du procédé de séparation mis en œuvre par le système de séparation de la figure 1 ;
- La figure 11 est une vue en perspective de dispositifs d'accumulation d'un système de séparation selon un deuxième mode de réalisation ;
- La figure 12 est une vue de côté d'un dispositif d'accumulation du système de séparation selon le deuxième mode de réalisation ;
- La figure 13 est une vue en perspective de dispositifs d'accumulation d'un système de séparation selon un troisième mode de réalisation ;
- La figure 14 est un diagramme illustrant les étapes du procédé de séparation proposé.

Parmi les différents modes de réalisation illustrés, les éléments identiques portent les mêmes références numériques.

### DESCRIPTION DETAILLEE DE L'INVENTION

Pour réduire la vitesse du flux de tablettes compactées, on propose donc d'utiliser un système de séparation du flux de tablettes ayant été compactées par un système de compaction telle qu'une presse rotative.

Le système de séparation proposé est particulièrement avantageux en ce qu'il permet de séparer les tablettes compactées tout en évitant qu'il y ait une remontée des tablettes compactées dans le dispositif de compaction, ce qui peut arriver si le flux de tablettes compactées en sortie du dispositif de compaction est par exemple arrêté pendant un temps trop important.

Le système de séparation proposé repose sur un principe d'accumulation de tablettes compactées d'une part, puis d'évacuation forcée de ces tablettes accumulées d'autre part. Le temps d'évacuation forcé est de préférence utilisé pour aiguiller les tablettes compactées vers l'une parmi plusieurs sorties du système de séparation.

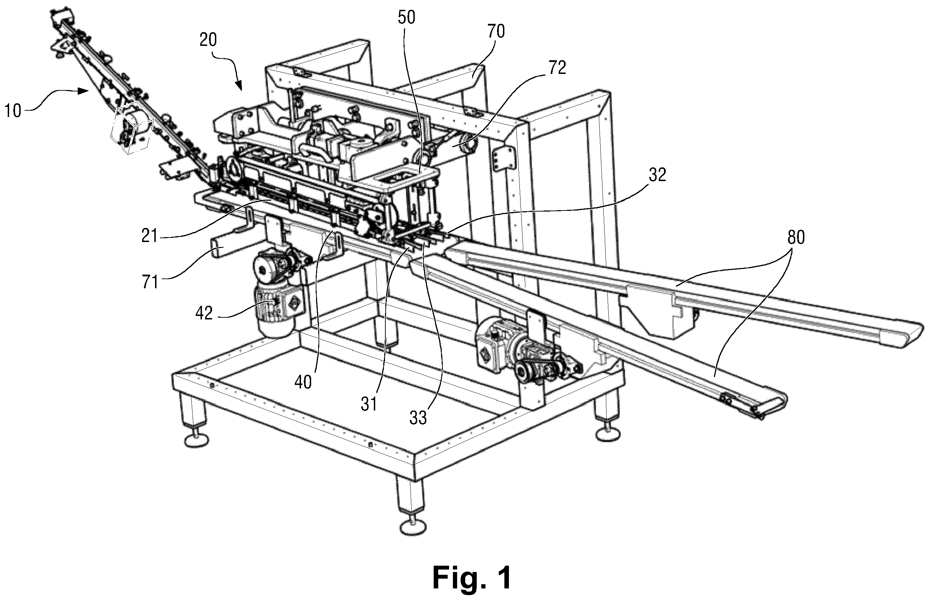

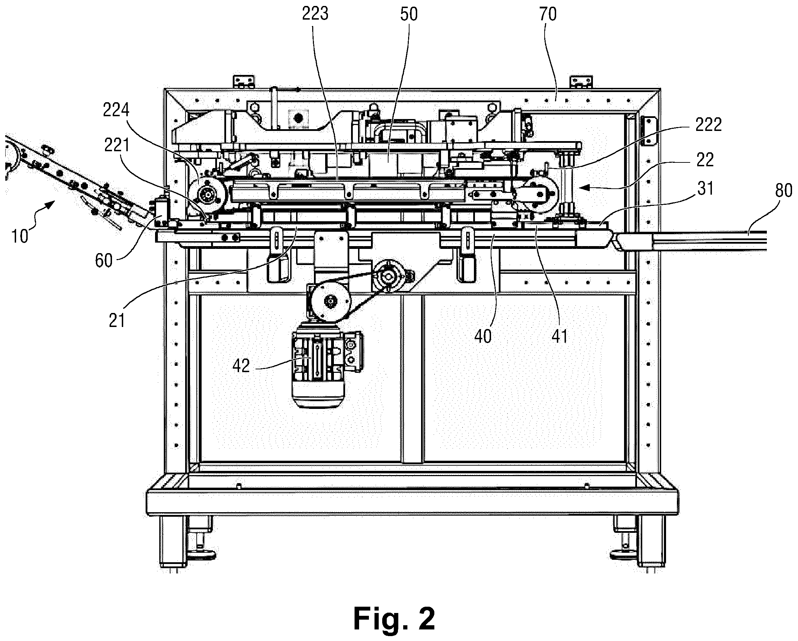

Les figures 1 et 2 illustrent un exemple d'un système de séparation proposé.

Le système de séparation comprend tout d'abord une ligne d'entrée 10 qui est configurée pour récupérer un flux de tablettes en sortie d'un dispositif de compaction (non représenté).

Les tablettes ayant été compactées dans le dispositif de compaction entrent donc dans la ligne d'entrée 10 à la cadence de production du dispositif de compaction, par exemple à la cadence de 1500 tablettes par minute, soit 25 tablettes par seconde.

La ligne d'entrée 10 est de préférence inclinée par rapport à la surface sur laquelle est agencée le système de séparation, de sorte que la gravité participe au déplacement des tablettes compactées dans la ligne d'entrée 10.

La ligne d'entrée 10 peut être conçue comme un rail ayant une surface de glissement sur laquelle les tablettes compactées glissent. Une telle surface de glissement peut être une surface plane de glissement ou peut être formée d'une pluralité de rouleaux adjacents montés libre en rotation sur lesquels les tablettes compactées sont destinées à glisser.

Il pourrait selon un autre exemple être prévu que la ligne d'entrée comprenne une surface de convoyage motorisée destinée à accompagner le déplacement des tablettes compactées.

Les tablettes compactées se déplacent donc dans la ligne d'entrée 10 à une certaine vitesse qui correspond à la vitesse de sortie des tablettes compactées du dispositif de compaction combinée aux effets dus à la configuration de la ligne d'entrée en tant que telle, par exemple à la gravité qui vient ajouter une composant de vitesse spécifique.

Le système de séparation comprend en outre plusieurs lignes de sortie (31 ; 32 ; 33) qui sont configurées pour évacuer des tablettes du système de séparation.

Il est prévu au minimum deux lignes de sortie (31 ; 32 ; 33) pour effectivement séparer le flux de tablettes compactées, mais il peut être envisagé qu'il y ait plus que deux lignes de sortie (31 ; 32 ; 33).

Dans l'exemple illustré à la figure 1, on voit par exemple trois lignes de sortie (31 ; 32 ; 33), deux des trois lignes de sortie (31 ; 32) étant prévues pour une séparation effective du flux, c'est-à-dire que le flux de tablettes compactées continue en sortie de ces deux lignes de sortie (31 ; 32), tandis qu'une troisième ligne de sortie 33 est prévue pour une éventuelle éjection de tablettes du système de séparation afin de les sortir du flux de tablettes compactées.

Les lignes de sortie (31 ; 32 ; 33) sont de préférence agencées sensiblement parallèlement les unes par rapport aux autres, ce qui permet de réduire l'encombrement du système de séparation.

Le système de séparation comprend par ailleurs un dispositif d'accumulation 20 de tablettes qui est positionné entre la ligne d'entrée 10 et les lignes de sortie (31 ; 32 ; 33). Comme on va le voir, le dispositif d'accumulation 20 est prévu pour une accumulation périodique d'un nombre déterminé de tablettes. Cela signifie que le dispositif d'accumulation 20 est configuré pour accumuler et donc stocker des tablettes compactées en provenance de la ligne d'entrée 10 jusqu'à atteindre un nombre de tablettes prédéterminé, par exemple 24 tablettes, avant de les libérer en direction de l'une des lignes de sortie (31 ; 32 ; 33).

A cette fin, le dispositif d'accumulation 20 comprend une ligne d'accumulation 21 de tablettes et un ensemble de régulation 22 du flux de tablettes.

L'ensemble de régulation 22 est prévu pour permettre l'accumulation dans la ligne d'accumulation 21 de tablettes compactées en provenance de la ligne d'entrée 10. A cet égard, l'ensemble de régulation 22 comprend un organe de retenu, un tel organe de retenue étant configuré pour stopper le flux de tablettes dans la ligne d'accumulation 21, par exemple en venant obstruer la ligne d'accumulation 21.

L'ensemble de régulation 22 présente en outre la particularité de pouvoir évacuer de manière forcée les tablettes compactées s'étant accumulées dans la ligne d'accumulation 21, en direction de l'une des lignes de sortie (31 ; 32 ; 33). A cet égard, l'ensemble de régulation 22 comprend par exemple un organe de poussée des tablettes, un tel organe de poussée étant prévu pour forcer le déplacement des tablettes compactées s'étant accumulées dans la ligne d'accumulation vers l'une des lignes de sortie (31 ; 32 ; 33). Il est entendu que l'organe de retenue aura été désenclenché avant de forcer l'évacuation des tablettes de la ligne d'accumulation 21.

L'organe de poussée peut par exemple s'étendre dans la ligne d'accumulation 21 et venir se positionner contre une tablette compactée afin pousser cette tablette et le train de tablettes accumulées devant cette tablette dans le sens de déplacement des tablettes, en direction de l'une des lignes de sortie (31 ; 32 ; 33).

De préférence, l'organe de poussée est configuré pour pousser les tablettes accumulées dans la ligne d'évacuation 21 à une vitesse d'évacuation supérieure à la vitesse de convoyage des tablettes dans ligne d'accumulation 21. Il est à noter que la vitesse de convoyage des tablettes dans ligne d'accumulation 21 correspond de préférence sensiblement à la vitesse des tablettes compactées dans la ligne d'entrée 10.

De préférence, la vitesse d'évacuation est au moins 20% plus grande que la vitesse de convoyage des tablettes dans ligne d'accumulation 21, de préférence encore au moins 50% plus grande, et de préférence encore au moins le double de la vitesse d'entrée des tablettes dans ligne d'accumulation 21. La vitesse d'évacuation forcée peut par exemple être jusque 5 fois la vitesse de convoyage des tablettes dans ligne d'accumulation 21.

Par exemple, si les tablettes d'une longueur de l'ordre de 30 à 35 mm entrent dans la ligne d'accumulation 10 à une vitesse d'environ 1 m/s correspondant à une cadence de production du dispositif de compaction d'environ 1500 tablettes par minute, la vitesse d'évacuation des tablettes imposée par l'organe de poussée peut être de l'ordre de 1.2 m/s à 5 m/s.

Le système de séparation proposé comprend en outre une surface de convoyage 40 placée sous la ligne d'accumulation 21 et prévue pour accompagner le déplacement des tablettes de la ligne d'entrée 10 vers les lignes de sortie (31 ; 32 ; 33). Cette surface de convoyage 40 permet notamment de déplacer les tablettes compactées dans la ligne d'accumulation 21 en vue d'une accumulation et/ou en vue de l'évacuation. Dans le cas de l'évacuation, la surface de convoyage 40 a une action combinée avec l'organe de poussée pour évacuer les tablettes vers l'une des lignes de sortie (31 ; 32 ; 33).

Selon l'exemple de réalisation illustré sur les figures, la surface de convoyage 40 peut comprendre un tapis de convoyage 41 entrainé par un moteur 42. Ce tapis de convoyage 41 est entrainé à une certaine vitesse de convoyage.

De préférence, la vitesse de convoyage est égale à la vitesse d'entrée des tablettes dans ligne d'accumulation 21, sensiblement égale à la vitesse des tablettes compactées dans la ligne d'entrée 10.

Selon un autre exemple de réalisation non représenté, la surface de convoyage 40 peut comprendre une pluralité de rouleaux adjacents montés libre en rotation sur lesquels les tablettes sont destinées à glisser.

La surface de convoyage 40 peut en outre être inclinée pour favoriser le déplacement des tablettes compactée par utilisation de la gravité.

Le système de séparation comprend en outre un dispositif d'aiguillage 50 prévu pour diriger un flux de tablettes en provenance de la ligne d'entrée 10 en direction de l'une ou l'autre des lignes de sortie (31 ; 32 ; 33).

Le dispositif d'aiguillage 50 peut prendre différentes formes.

Selon un exemple de réalisation tel qu'illustré aux figures 1 à 4, le dispositif d'aiguillage 50 comprend un organe de support 51 sur lequel est fixé le dispositif d'accumulation 20. Un tel organe de support 51 présente la particularité d'être monté pivotant selon un axe de pivot 52 orthogonal à la surface de convoyage 40 de manière à relier la ligne d'accumulation 21 du dispositif d'accumulation 20 à l'une ou l'autre des lignes de sortie (31 ; 32 ; 33) en fonction de la position angulaire de l'organe de support 51.

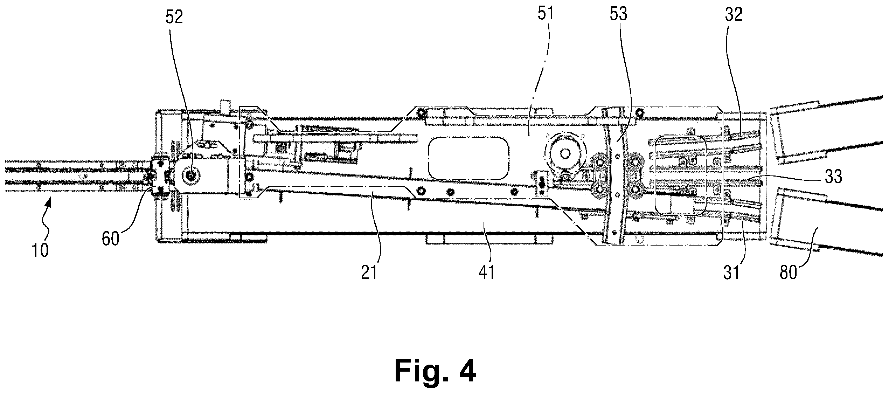

La figure 4 est une vue de dessus illustrant le système de séparation comprenant un exemple d'un tel organe de support 51 monté pivotant. Pour faciliter le déplacement de l'organe de support 51, il est de préférence prévu un rail de guidage 53, ce rail de guidage 53 étant par exemple courbé selon un rayon de courbure correspondant à la rotation souhaitée de l'organe de support 51.

Selon la configuration illustrée à la figure 4, la ligne d'accumulation 21 est positionnée en face d'une première ligne d'entrée 31 mais peut, grâce à l'organe de support 51 monté pivotant selon l'axe de pivot 52, être positionnée en regard d'une autre ligne de sortie, par exemple la deuxième ligne de sortie 32 ou la troisième ligne de sortie 33.

L'utilisation d'un organe de support 51 monté pivotant et prévu pour supporter le dispositif d'accumulation 20 permet donc, avec un unique dispositif d'accumulation 20 dans le système de séparation, de séparer le flux de tablettes compactées en provenance de la ligne d'entrée 10 et de diriger les tablettes ainsi séparées vers les différentes lignes de sortie (31 ; 32 ; 33) du système de séparation.

Dans ce cas, l'aiguillage vers l'une ou l'autre des lignes de sortie (31 ; 32 ; 33) se fait donc après ou pendant l'accumulation par le dispositif d'accumulation 20.

Selon un autre mode de réalisation, le système de séparation comprend plusieurs dispositifs d'accumulation 20 de tablettes ayant respectivement une ligne d'accumulation 21 placée en amont de l'une des lignes de sortie (31 ; 32 ; 33).

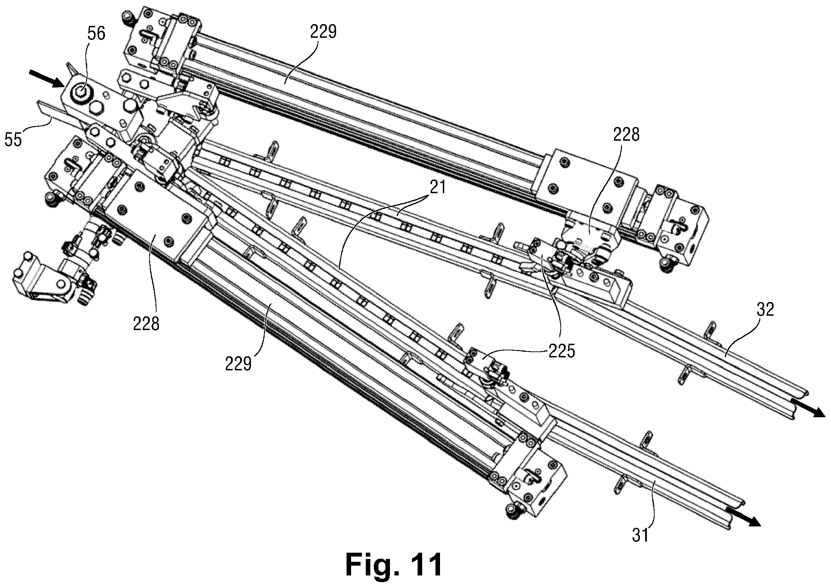

Dans ce cas, il peut être prévu dans le système de séparation autant de dispositifs d'accumulation 20 qu'il y a de ligne de sortie (31 ; 32 ; 33), chaque ligne de sortie (31 ; 32 ; 33) étant dans le prolongement d'une ligne d'accumulation 21 d'un des dispositifs d'accumulation 20. Les figures 11 à 13 illustrent des exemples de réalisation selon une telle configuration où le système de séparation comprend plusieurs dispositifs d'accumulation alimentant chacun une ligne de sortie spécifique.

Dans ce cas, le dispositif d'aiguillage 50 comprend de préférence un organe d'aiguillage 55 monté pivotant selon un axe de pivot 56 orthogonal à la surface de convoyage 40, cet organe d'aiguillage 55 permettant de relier la ligne d'entrée 10 à l'une ou l'autre des lignes d'accumulation 21 des dispositifs d'accumulation 20 en fonction de la position angulaire de l'organe d'aiguillage 55.

Selon cette configuration, l'aiguillage vers l'une ou l'autre des lignes de sortie (31 ; 32 ; 33) se fait avant l'accumulation par le dispositif d'accumulation 20.

Selon un mode de réalisation préféré, le système de séparation proposé comprend en outre un organe de blocage 60 agencé entre la ligne d'entrée 10 et le dispositif d'accumulation 20 afin de bloquer les tablettes dans la ligne d'entrée 10 et stopper le flux de tablettes entrant dans le dispositif d'accumulation 20.

Par exemple, l'organe de blocage 60 comprend une pièce de compression montée mobile entre une position escamotée laissant libre la ligne d'entrée 10 et une position déployée dans laquelle la pièce de compression vient bloquer une tablette dans la ligne d'entrée. Plus précisément, la pièce de compression est prévue pour être rapportée sur une tablette présente dans la ligne d'entrée 10 afin de la bloquer par compression.

La pièce de compression peut par exemple être montée mobile en translation selon un axe sensiblement perpendiculaire à la ligne d'entrée 10.

L'organe de blocage pourrait se présenter sous d'autres formes. On pourrait par exemple prévoir une tige ou plaque montée en translation afin de fermer la ligne d'entrée 10, les tablettes venant en butée contre cette tige ou plaque.

Le système de séparation comprend en outre de préférence un bâti 70 prévu pour supporter tout ou partie des éléments constitutifs du système de séparation. En particulier, le bâti 70 est prévu pour supporter le dispositif d'accumulation 20, la surface de convoyage 40 et le dispositif d'aiguillage 50.

Les lignes de sortie (31 ; 32 ; 33) sont aussi de préférence agencées sur le bâti 70.

La ligne d'entrée 10 pourrait aussi être solidaire du bâti 70 mais cela n'est pas nécessaire. La ligne d'entrée 10 faisant la jonction entre le dispositif de compaction et le dispositif d'accumulation 20, elle peut en effet simplement être positionnée entre le dispositif de compaction et le dispositif d'accumulation 20 sans nécessairement être solidaires de ces dispositifs.

De préférence, le dispositif d'accumulation 20 est montée de manière escamotable par rapport à la surface de convoyage 40 afin de permettre un accès à la surface de convoyage. Ceci est particulièrement avantageux pour faciliter le nettoyage ou la maintenance du système de séparation.

A cet égard, il peut par exemple être prévu que le bâti 70 comprenne un corps principal 71 sur lequel la surface de convoyage 40 est agencée et un support 72 monté pivotant par rapport au corps principal 71 selon un axe parallèle au plan formé par la surface de convoyage, le support 72 étant notamment prévu pour porter les différents éléments du dispositif d'accumulation 20.

La structure générale du ou des dispositifs d'accumulation 20 prévus dans le système de séparation a été décrite ci-dessus. L'ensemble de régulation 22 prévu dans le dispositif d'accumulation 20 peut toutefois prendre différentes constructions.

Selon un exemple de réalisation tell qu'illustré aux figures 1 à 4, l'ensemble de régulation 22 comprend une première pièce allongée de régulation 221 et une deuxième pièce allongée de régulation 222, les première et deuxième pièces allongées de régulation (221 ; 222) étant montées mobiles dans le dispositif d'accumulation 20 et configurées pour s'étendre dans la ligne d'accumulation 21. En outre, les première et deuxième pièces allongées de régulation (221 ; 222) sont prévues pour se déplacer en translation le long de la ligne d'accumulation.

Selon cet exemple de réalisation, les première et deuxième pièces allongées de régulation (221 ; 222) sont configurées pour former alternativement l'organe de poussée et l'organe de retenue de l'ensemble de régulation 22.

De préférence, comme il ressort du descriptif ci-dessous concernant fonctionnement de cet exemple de réalisation du système de séparation, la première pièce allongée de régulation 221 forme l'organe de poussée lorsque la deuxième pièce allongée de régulation 222 forme l'organe de retenue, et inversement la deuxième pièce allongée de régulation 222 forme l'organe de poussée lorsque la première pièce allongée de régulation forme l'organe de retenue 221.

De préférence encore, le dispositif d'accumulation 20 est configuré pour un déplacement synchrone des première et deuxième pièces allongées de régulation (221 ; 222).

A cette fin, les première et deuxième pièces allongées de régulation (221 ; 222) sont par exemple montées sur un agencement de courroie s'étendant le long de la ligne d'accumulation 21, chacune des première et deuxième pièces allongées de régulation (221 ; 222) s'étendant à partir d'une courroie 223 de l'agencement de courroie, par exemple de manière sensiblement perpendiculaire par rapport à la courroie 223 comme cela est illustré aux figures. Un tel agencement est mécaniquement assez simple puisque les première et deuxième pièces allongées de régulation (221 ; 222) sont fixes par rapport à la courroie 223 qui est la seule pièce qui est entrainée par un mécanisme d'engrenage entrainé en rotation par un moteur.

La courroie 223 de l'agencement de courroie s'étend de préférence entre une entrée de la ligne d'accumulation 21 et une sortie de la ligne d'accumulation 21, ce qui permet de couvrir l'ensemble de la ligne d'accumulation 21. Il est par exemple prévu deux roues d'engrènement 224 positionnées respectivement au niveau de l'entrée de la ligne d'accumulation 21 et au niveau de la sortie de la ligne d'accumulation 21, ces deux roues d'engrènement 224 entrainant la courroie 223.

Les première et deuxième pièces allongées de régulation (221 ; 222) peuvent par exemple être agencées sur la courroie 223 à équidistance, notamment par rapport au développé de la courroie. Ainsi lorsque l'une des première et deuxième pièces allongées de régulation (221 ; 222) est positionné à une position spécifique sur le chemin de déplacement de la courroie 223, alors l'autre des première et deuxième pièces allongées de régulation (221 ; 222) est dans une position exactement opposée sur le chemin de déplacement de la courroie 223.

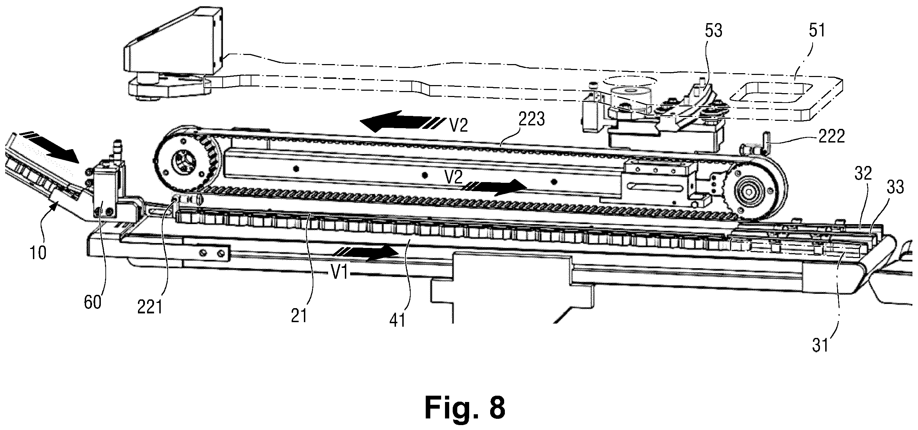

Ainsi, lorsque l'une des première et deuxième pièces allongées de régulation (221 ; 222) s'étend dans la ligne d'accumulation 21 au niveau de l'entrée de la ligne d'accumulation 21 alors l'autre des première et deuxième pièces allongées de régulation (221 ; 222) s'étend en dehors de la ligne d'accumulation 21 au niveau de la sortie de la ligne d'accumulation 21. Une telle configuration est illustrée aux figures 2 et 8 par exemple.

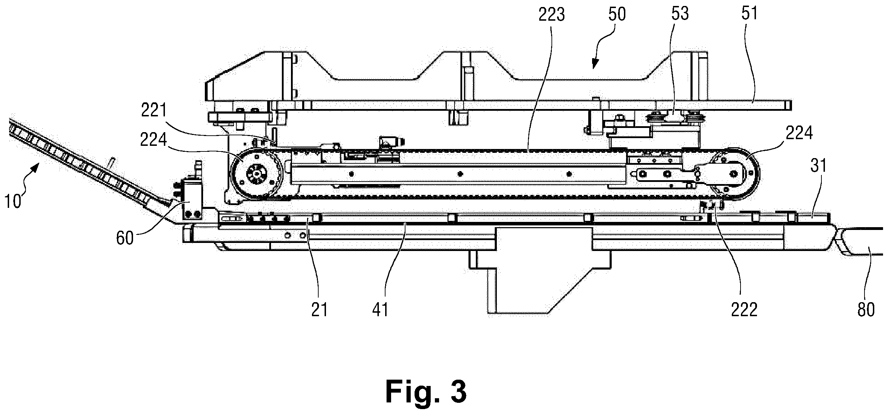

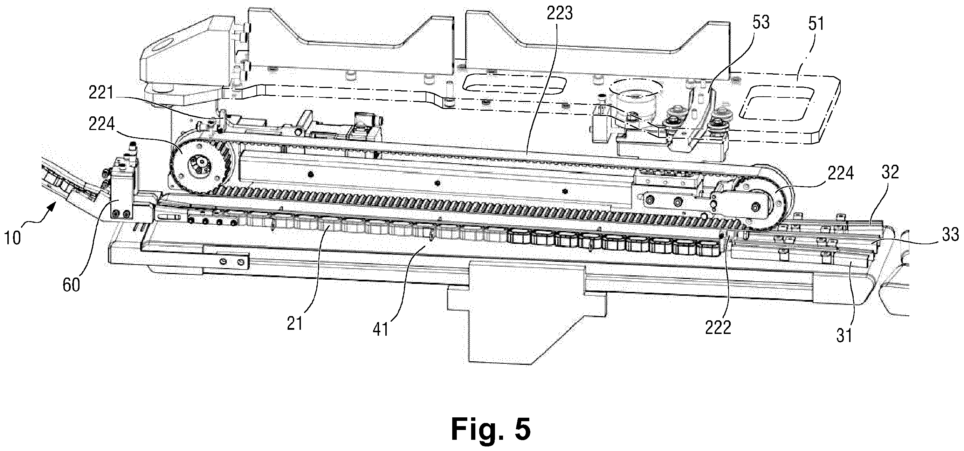

Respectivement, lorsque l'une des première et deuxième pièces allongées de régulation (221 ; 222) s'étend dans la ligne d'accumulation 21 au niveau de la sortie de la ligne d'accumulation 21 alors l'autre des première et deuxième pièces allongées de régulation (221 ; 222) s'étend en dehors de la ligne d'accumulation 21 au niveau de l'entrée de la ligne d'accumulation 21. Une telle configuration est illustrée aux figures 3, 5, et 6 par exemple.

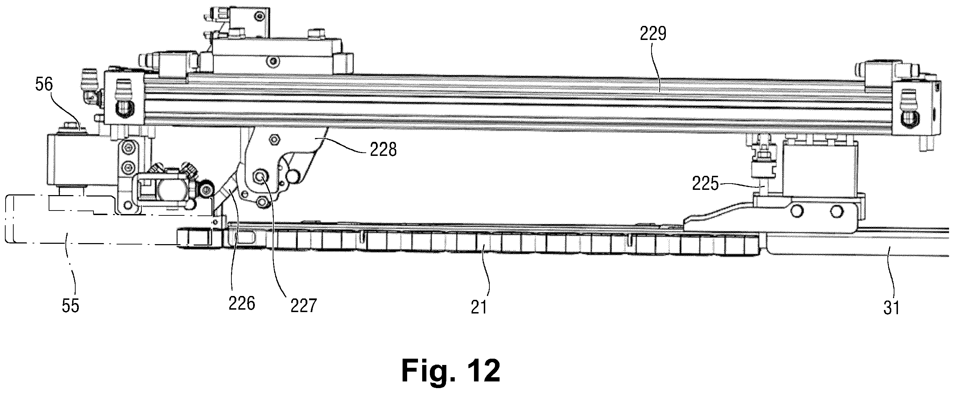

Selon un autre exemple de réalisation de l'ensemble de régulation 22, tel qu'illustré aux figures 11 et 12, l'organe de retenue des tablettes comprend une pièce de retenue 225 positionnée au niveau de l'extrémité de la ligne d'accumulation 21 du côté des lignes de sortie (31 ; 32 ; 33).

Une telle pièce de retenue 225 est montée mobile par rapport à la ligne d'accumulation 21 de sorte à se déplacer entre une position retractée dans laquelle la ligne d'accumulation 21 est laissée libre et une position déployée dans laquelle la pièce de retenue 225 vient obstruer la ligne d'accumulation 21 afin de retenir des tablettes présentes dans la ligne d'accumulation 21.

Par exemple, la pièce de retenue 225 est montée en translation selon un axe de translation s'étendant radialement par rapport à la ligne d'accumulation 21. L'axe de translation de la pièce de retenue 225 peut par exemple être orthogonal au plan de déplacement formée par la ligne d'accumulation 21.

Dans l'exemple de réalisation illustré aux figures 11 et 12, la pièce de retenue 225 est une tige montée en translation selon son propre axe qui est orthogonal à la ligne d'accumulation 21. Lorsqu'une accumulation dans la ligne d'accumulation 21 est désirée, la tige est déployée pour s'étendre dans la ligne d'accumulation 21 et elle forme ainsi une butée pour les tablettes se déplaçant dans la ligne d'accumulation 21.

L'organe de poussée peut quant à lui comprendre une pièce de poussée 226 montée en translation selon une direction parallèle à la ligne d'accumulation 21 et en outre mobile par rapport à la ligne d'accumulation 21 de sorte à se déplacer entre une position retractée dans laquelle la ligne d'accumulation 21 est laissée libre et une position déployée dans laquelle la pièce de poussée 226 s'étend dans la ligne d'accumulation 21. Une translation de la pièce de poussée 226 en position déployée permet ainsi de pousser les tablettes accumulées dans la ligne d'accumulation 21 en direction de l'une des lignes de sortie (31 ; 32 ; 33).

La pièce de poussée 226 peut par exemple être un élément allongé monté pivotant autour d'un axe de rotation 227 sur une pièce mobile 228 d'un vérin 229. Un tel vérin 229 est prévu pour mettre en translation la pièce mobile 228 selon l'axe longitudinal du corps de vérin 229, et par voie de conséquence la pièce de poussée 226.

Comme selon l'exemple de réalisation des figures 11 et 12, on peut utiliser un vérin 229 sans tige qui présente l'avantage d'avoir un encombrement axial limité. En effet, la longueur du vérin est sensiblement la même que la course selon laquelle l'élément mobile 228 doit se déplacer.

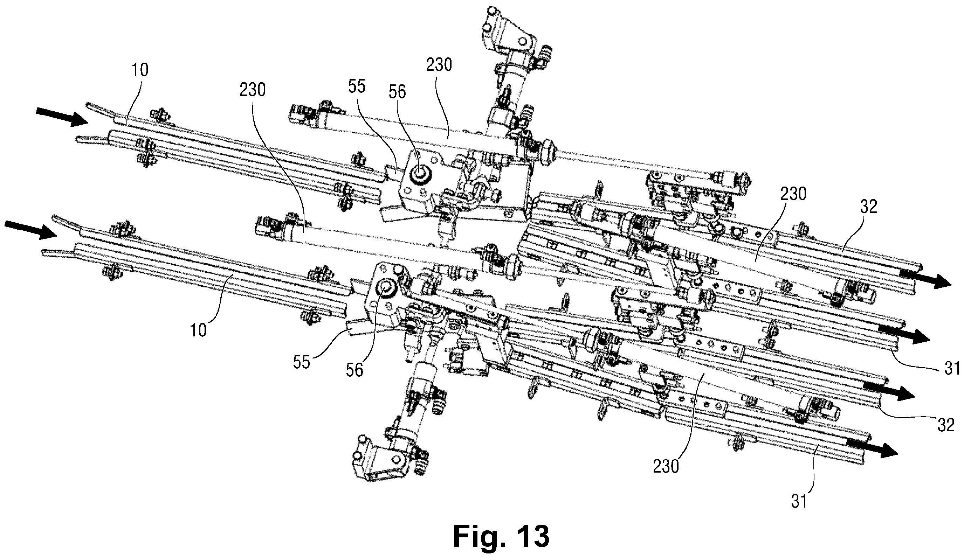

L'exemple de réalisation de la figure 13 repend un agencement similaire à celui des figures 11 et 12, à l'exception du vérin qui est cette fois un vérin à tige 230. Un tel vérin à tige 230 présente un encombrement axial plus important qu'un vérin sans tige mais il a un encombrement latéral moins important, ce qui est avantageux si plusieurs dispositifs d'accumulation 20 doivent être placés les uns à côté des autres.

Sur l'exemple illustré à la figure 13, deux systèmes de séparation sont agencés l'un à côté de l'autre, chaque système de séparation ayant deux dispositifs d'accumulation présentant chacun une ligne d'accumulation 21 reliée à une ligne de sortie (31 ; 32) du système de séparation.

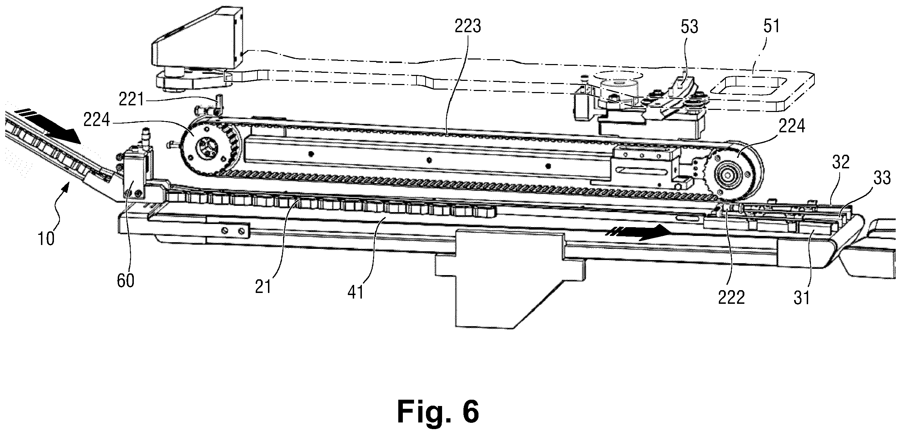

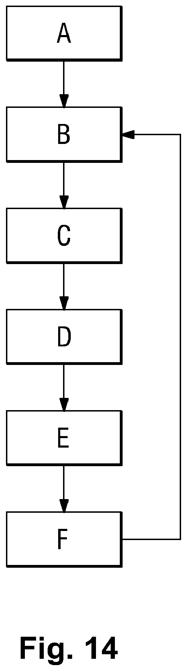

Nous allons désormais détailler le principe général de séparation d'un flux de tablettes ayant été compactées par un dispositif de compaction. Les étapes d'un tel processus sont schématisées à la figure 14. Les figures 6 à 10 illustrent le principe de séparation proposé appliqué au système de séparation illustré aux figures 1 à 5. Le fonctionnement proposé n'est toutefois pas limité à ce système de séparation et pourrait être appliqué avec d'autres configurations du système de séparation, en particulier selon les exemples de réalisation des figures 11, 12, et 13. Les flèches utilisées dans les figures illustrent les déplacements des éléments telles que les tablettes ou les pièces entrainées du système de séparation tels que le tapis de convoyage 41 ou la courroie 223.

Le première étape, notée étape A, consiste à récupérer dans la ligne d'entrée 10 un flux de tablettes en sortie d'un dispositif de compaction. A cette fin, la ligne d'entrée 10 est directement couplée à la sortie d'un dispositif de compaction.

Comme illustré à la figure 6, les tablettes compactées se déplacent à l'intérieur de la ligne d'entrée 10. Elles descendent par exemple par gravité du fait de l'inclinaison de la ligne d'entrée 10.

Il y a ensuite une étape B d'accumulation des tablettes en provenance de la ligne d'entrée 10. Pour ce faire, les tablettes en provenance de la ligne d'entrée 10 sont transportées dans la ligne d'accumulation 21 du dispositif d'accumulation 20. Cela implique que l'organe de blocage 60 en sortie de la ligne d'entrée 10 est retracté pour laisser passer les tablettes compactées en direction de la ligne d'accumulation 21.

De préférence, le tapis de convoyage 41 entraine les tablettes le long de la ligne d'accumulation 21 à une vitesse donnée, appelée vitesse de convoyage V1.

Pour qu'il y ait effectivement accumulation des tablettes dans la ligne d'accumulation 21, il convient que l'organe de retenue soit en position déployée. Selon l'exemple illustré à la figure 6, la courroie 223 est fixe et positionnée de sorte que la deuxième pièce allongée de régulation 222 s'étendent dans la ligne d'accumulation 21 afin de former une butée empêchant les tablettes de sortir de la ligne d'accumulation 21.

L'étape suivante est l'étape C qui s'enclenche une fois qu'un nombre déterminé de tablettes a été accumulé dans la ligne d'accumulation. On fixe par exemple ce nombre de tablettes accumulées à 24, ce qui correspond sensiblement au nombre de tablettes produites par seconde pour un dispositif de compaction produisant à une cadence de 1500 tablettes par minute.

Il convient lors de cette étape C de tout d'abord bloquer les tablettes dans la ligne d'entrée 10 afin de stopper le flux de tablettes entrant dans la ligne d'accumulation 21 (étape C1). Pour ce faire, on vient par exemple actionner l'organe de blocage 60 prévu pour bloquer une tablette en sortie de la ligne d'entrée 10, juste avant d'entrer dans le dispositif d'accumulation 20. Ce blocage va entrainer une accumulation temporaire de tablettes dans la ligne d'entrée 10, mais il est suffisamment court pour éviter une remontée des tablettes dans le dispositif de compaction.

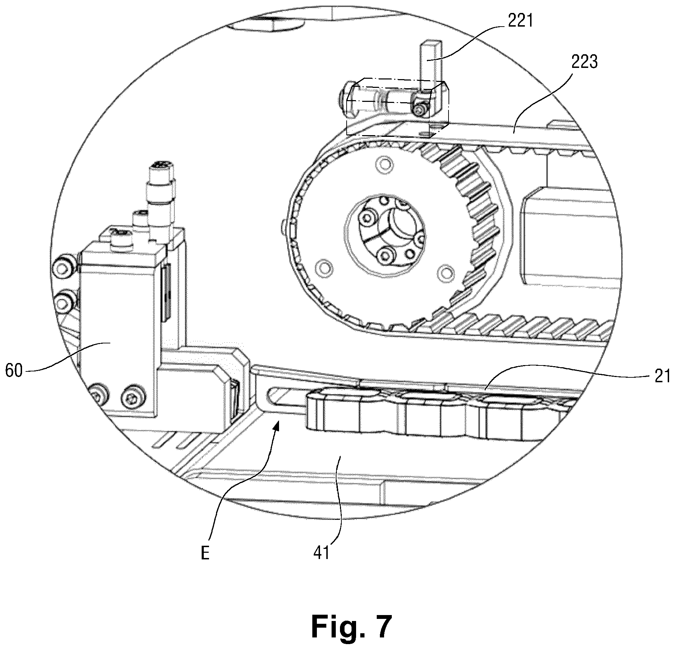

Comme illustré à la figure 7, ce blocage des tablettes au niveau de la sortie de la ligne d'entrée 10 permet de libérer un espace E au niveau de l'entrée de la ligne d'accumulation 21 puisque les tablettes sont toujours en mouvement dans la ligne d'accumulation 21, notamment grâce à l'entrainement du tapis de convoyage 41.

On peut alors démarrer une évacuation forcée des tablettes accumulées de la ligne d'accumulation 21 en direction d'une première ligne de sortie 31 (étape C2). Pour ce faire, on peut actionner la courroie 223 pour qu'elle entraîne les première et deuxième pièces allongées de régulation (221 ; 222).

Ainsi que cela est illustré à la figure 8, le déplacement de la courroie 223 va entrainer la deuxième pièce allongée de régulation 222 de sorte à libérer la ligne d'accumulation 21 tandis que la première pièce allongée de régulation 221 va entrer dans la ligne d'accumulation 21 de sorte à venir pousser le train de tablettes qui était boqué dans la ligne d'accumulation 21. Le fait qu'un espace E ait été créé au moment du blocage des tablettes dans la ligne d'entrée 10 permet à la première pièce allongée de régulation 221 d'entrer dans la ligne d'accumulation 21 sans venir percuter de tablettes et éviter ainsi de l'endommager.

Comme on l'a dit plus haut, la courroie 223 tourne de préférence à une vitesse de courroie V2 supérieure à la vitesse de convoyage V1 du tapis de convoyage 41, de sorte à créer une évacuation forcée des tablettes de la ligne d'évacuation 21 par la première pièce allongée de régulation 221.

Une fois que l'évacuation forcée des tablettes de l'étape C2 a démarré, on peut débloquer les tablettes accumulées dans la ligne d'entrée 10 afin qu'elles viennent s'accumuler dans la ligne d'accumulation 21 (étape D). A cette fin, on peut désactiver l'organe de blocage 60 afin de libérer les tablettes retenues dans la ligne d'entrée 10.

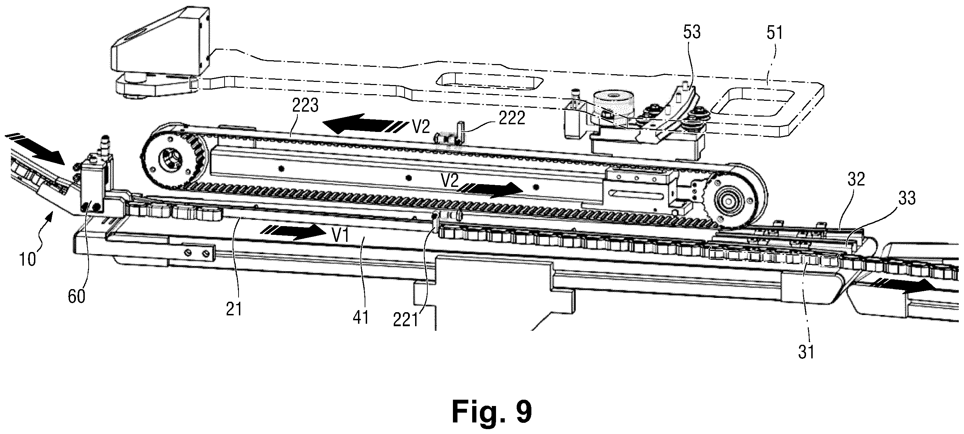

Comme illustré à la figure 9, les tablettes sont donc évacuées vers une ligne de sortie, grâce notamment à la première pièce allongée de régulation 221 qui sert d'organe de poussée, à la vitesse V2 d'évacuation forcée. Dans le même temps, les tablettes en provenance de la ligne d'entrée 10 entrent dans la ligne d'accumulation 21 en étant par exemple transportées par le tapis de convoyage 41, à la vitesse de convoyage V1.

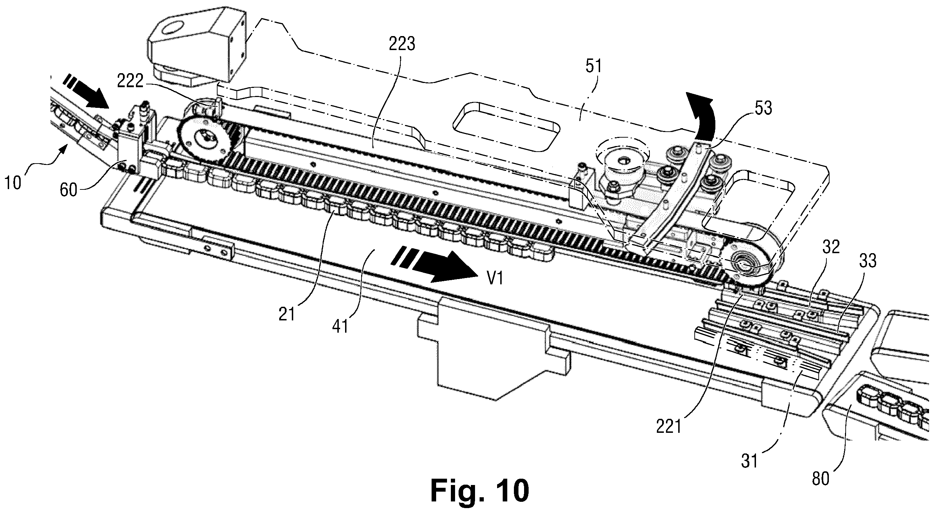

Avec un système de séparation ayant un seul dispositif d'accumulation 20 comme celui des figures 1 à 5, on peut déplacer le dispositif d'accumulation 20 avant d'enclencher l'étape ultérieure, afin notamment de déplacer la ligne d'accumulation 21 et la positionner en regard d'une autre ligne de sortie du système de séparation. Le dispositif d'accumulation 20 peut par exemple être déplacé pendant que les tablettes sont en train de s'accumuler dans la ligne d'accumulation. Un tel repositionnement du dispositif d'accumulation est illustré à la figure 10.

Avec un système de séparation ayant plusieurs dispositifs d'accumulation 20 comme ceux des figures 11 à 13, on pourra déplacer l'organe d'aiguillage 55 pour que la ligne d'entrée 10 soit reliée à l'une ou l'autre des lignes d'accumulation 21 des dispositifs d'accumulation 20 du système de séparation. Cet actionnement de l'organe d'aiguillage 55 se fait avant de débuter une accumulation de tablettes, c'est-à-dire avant de désenclencher l'organe de blocage de la ligne d'entrée 10.

Le cycle des étapes C et D qui permettait de diriger des tablettes compactées dans une première ligne de sortie 31 est réitéré afin d'accumuler puis diriger des tablettes compactées dans une deuxième ligne de sortie 32.

Avec la configuration du système de séparation des figures 1 à 5, la première pièce allongée de régulation 221 qui a poussé les tablettes en dehors de la ligne d'accumulation 21 vient se positionner au niveau de la sortie de la ligne d'évacuation 21 et est maintenue en position déployée dans la ligne d'accumulation 21 afin de servir d'organe de retenue. La courroie 223 est donc immobile et maintenue fixe à la position permettant une accumulation des tablettes dans la ligne d'accumulation 21. Comme on le voit à la figure 10, la deuxième pièce allongée de régulation 222 a été déplacée pendant l'évacuation forcée des tablettes et elle se trouve positionnée au niveau de l'entrée de la ligne d'accumulation 21, et viendra ultérieurement servir d'organe de poussée pour la suite du cycle de séparation.

Une telle configuration est particulièrement avantageuse puisqu'elle permet de réduire, voire de supprimer, tout temps mort dans le procédé de séparation. En effet, comme les première et deuxième pièces allongées de régulation (221 ; 222) sont configurées pour former alternativement l'organe de poussée et l'organe de retenue, il n'y a pas de temps perdu pour réinitialiser le système, en particulier pour que l'organe de poussée se déplace de la sortie de la ligne d'accumulation 21 vers l'entrée de la ligne d'accumulation 21.

Ces cycles successifs sont ensuite répétés en boucle pour séparer les tablettes compactées en provenance du dispositif de compaction et les diriger successivement vers une première ligne de sortie puis vers une deuxième de sortie, puis de nouveau vers la première ligne de sortie puis vers la deuxième de sortie, et ainsi de suite.

Les dispositif et procédé de séparation de tablettes compactées ont été décrit en référence à un seul système de séparation. Il est toutefois à noter que selon les besoins de séparation en vue des étapes de post-traitement, on pourra utiliser plusieurs systèmes de de séparation de tablettes positionnés en série et/ou en parallèle et étant reliés entre eux par des dispositifs de convoyage 80.

En particulier, on pourra prévoir un système de séparation à la sortie d'un dispositif de compaction, ce système de séparation ayant deux lignes de sortie couplées elles-mêmes à des lignes d'entrées de deux autres systèmes de séparation, ayant également chacun deux lignes de sortie pouvant être couplées elles-mêmes à des lignes d'entrées de quatre autres systèmes de séparation. Avec un tel agencement, on peut notamment diviser le flux de tablettes en quatre, et diviser d'autant la vitesse de déplacement.

Les dispositifs de convoyages prévus à la sortie des systèmes de séparation permettent de régler plus finement la vitesse de déplacement des tablettes en jouant sur des décélérations ou accélérations, notamment juste avant le dispositif de post-traitement pour que la vitesse de déplacement des tablettes corresponde exactement à la vitesse requise dans le dispositif de post-traitement.

## Revendications

1. Système de séparation d'un flux de tablettes compactées par un dispositif de compaction, dans lequel le système de séparation comprend :
- une ligne d'entrée (10) configurée pour récupérer un flux de tablettes en sortie du dispositif de compaction ;
- deux lignes de sortie (31 ; 32 ; 33) prévues pour évacuer des tablettes du système de séparation ;
- un dispositif d'accumulation (20) de tablettes positionné entre la ligne d'entrée (10) et les lignes de sortie (31 ; 32 ; 33) et prévu pour une accumulation périodique d'un nombre déterminé de tablettes, le dispositif d'accumulation (20) comprenant une ligne d'accumulation (21) de tablettes et un ensemble de régulation (22) du flux de tablettes, l'ensemble de régulation (22) du flux de tablettes comprenant un organe de retenue des tablettes prévu pour permettre une accumulation des tablettes dans la ligne d'accumulation (21) et un organe de poussée des tablettes prévu pour évacuer de manière forcée les tablettes accumulées de la ligne d'accumulation (21) ;
- une surface de convoyage (40) placée sous la ligne d'accumulation (21) et prévue pour accompagner le déplacement des tablettes de la ligne d'entrée (10) en direction des lignes de sortie (31 ; 32 ; 33) ;
- un dispositif d'aiguillage (50) prévu pour diriger un flux de tablettes en provenance de la ligne d'entrée (10) en direction de l'une ou l'autre des lignes de sortie (31 ; 32 ; 33).

2. Système selon la revendication 1, dans lequel l'organe de poussée est configuré pour pousser les tablettes accumulées dans la ligne d'accumulation (21) à une vitesse d'évacuation (V2) supérieure à une vitesse de convoyage (V1) des tablettes dans ligne d'accumulation (21).

3. Système selon l'une quelconque des revendications 1 et 2, dans lequel le dispositif d'aiguillage (50) comprend un organe de support (51) sur lequel est fixé le dispositif d'accumulation (20), l'organe de support (51) étant monté pivotant selon un axe de pivot (52) orthogonal à la surface de convoyage (40) de manière à relier la ligne d'accumulation (21) du dispositif d'accumulation (20) à l'une ou l'autre des lignes de sortie (31 ; 32 ; 33) en fonction de la position angulaire de l'organe de support (51).

4. Système selon l'une quelconque des revendications 1 et 2, comprenant deux dispositifs d'accumulation (20) de tablettes ayant respectivement une ligne d'accumulation (21) placée en amont de l'une des lignes de sortie (31 ; 32 ; 33), et le dispositif d'aiguillage (50) comprend un organe d'aiguillage (55) monté pivotant selon un axe de pivot (56) orthogonal à la surface de convoyage (40) de manière à relier la ligne d'entrée (10) à l'une ou l'autre des lignes d'accumulation (21) des dispositifs d'accumulation (20) en fonction de la position angulaire de l'organe d'aiguillage (55).

5. Système selon l'une quelconque des revendications 1 à 4, dans lequel l'ensemble de régulation (22) comprend une première pièce allongée de régulation (221) et une deuxième pièce allongée de régulation (222), les première et deuxième pièces allongées de régulation (221 ; 222) étant montées mobiles dans le dispositif d'accumulation (20) et configurées pour s'étendre dans la ligne d'accumulation (21) et être déplacées en translation le long de la ligne d'accumulation (21), les première et deuxième pièces allongées de régulation (221 ; 222) étant configurées pour former alternativement l'organe de poussée et l'organe de retenue.

6. Système selon la revendication 5, dans lequel la première pièce allongée de régulation (221) forme l'organe de poussée lorsque la deuxième pièce allongée de régulation (222) forme l'organe de retenue, et inversement la deuxième pièce allongée de régulation (222) forme l'organe de poussée lorsque la première pièce allongée de régulation (221) forme l'organe de retenue.

7. Système selon l'une quelconque des revendications 5 et 6, dans lequel le dispositif d'accumulation (20) est configuré pour un déplacement synchrone des première et deuxième pièces allongées de régulation (221 ; 222).

8. Système selon l'une quelconque des revendications 5 à 7, dans lequel les première et deuxième pièces allongées de régulation (221 ; 222) sont montée sur un agencement de courroie s'étendant le long de la ligne d'accumulation (21), chacune des première et deuxième pièces allongées de régulation (221 ; 222) s'étendant perpendiculairement par rapport à une courroie (223) de l'agencement de courroie.

9. Système selon la revendication 8, dans lequel la courroie (223) de l'agencement de courroie s'étend entre une entrée de la ligne d'accumulation (21) et une sortie de la ligne d'accumulation (21), les première et deuxième pièces allongées de régulation (221 ; 222) étant agencées sur la courroie (223) à équidistance de sorte que lorsque l'une des première et deuxième pièces allongées de régulation (221 ; 222) s'étend dans la ligne d'accumulation (21) au niveau de l'entrée de la ligne d'accumulation (21) alors l'autre des première et deuxième pièces allongées de régulation (221 ; 222) s'étend en dehors de la ligne d'accumulation (21) au niveau de la sortie de la ligne d'accumulation (21), et lorsque l'une des première et deuxième pièces allongées de régulation (221 ; 222) s'étend dans la ligne d'accumulation (21) au niveau de la sortie de la ligne d'accumulation (21) alors l'autre des première et deuxième pièces allongées de régulation (221 ; 222) s'étend en dehors de la ligne d'accumulation (21) au niveau de l'entrée de la ligne d'accumulation (21).

10. Système selon l'une quelconque des revendications 1 à 4, dans lequel :
- l'organe de retenue des tablettes comprend une pièce de retenue (225) positionnée au niveau de l'extrémité de la ligne d'accumulation (21) du côté des lignes de sortie (31 ; 32 ; 33) et montée mobile par rapport à la ligne d'accumulation (21) de sorte à se déplacer entre une position retractée dans laquelle la ligne d'accumulation (21) est laissée libre et une position déployée dans laquelle la pièce de retenue (225) vient obstruer la ligne d'accumulation (21) afin de retenir des tablettes dans la ligne d'accumulation (21) ; et
- l'organe de poussée comprend une pièce de poussée (226) montée en translation selon une direction parallèle à la ligne d'accumulation (21) et est en outre mobile par rapport à la ligne d'accumulation (21) de sorte à se déplacer entre une position retractée dans laquelle la ligne d'accumulation (21) est laissée libre et une position déployée dans laquelle la pièce de poussée (226) s'étend dans la ligne d'accumulation (21), une translation de la pièce de poussée (226) en position déployée permettant de pousser les tablettes accumulées dans la ligne d'accumulation (21) en direction de l'une des lignes de sortie (31 ; 32 ; 33).

11. Système selon l'une quelconque des revendications 1 à 10, comprenant un organe de blocage (60) agencé entre la ligne d'entrée (10) et le dispositif d'accumulation (20) afin de bloquer les tablettes dans la ligne d'entrée (10) et stopper le flux de tablettes entrant dans le dispositif d'accumulation (20).

12. Système selon la revendication 11, dans lequel l'organe de blocage (60) comprend une pièce de compression montée mobile entre une position escamotée laissant libre la ligne d'entrée (10) et une position déployée dans laquelle la pièce de compression vient bloquer une tablette dans la ligne d'entrée (10).

13. Système selon l'une quelconque des revendications 1 à 12, dans lequel la surface de convoyage (40) comprend un tapis de convoyage (41) entrainé par un moteur (42) à une vitesse de convoyage (V1), ou la surface de convoyage (40) comprend une pluralité de rouleaux adjacents montés libre en rotation sur lesquels les tablettes sont destinées à glisser, la surface de convoyage (40) étant de préférence inclinée pour favoriser le déplacement des tablettes par utilisation de la gravité.

14. Ensemble de séparation de tablettes comprenant plusieurs systèmes de séparation de tablettes selon l'une quelconque des revendications 1 à 13, les systèmes de séparation de tablettes étant positionnés en série et/ou en parallèle et étant reliés entre eux par des dispositifs de convoyage (80).

15. Procédé de séparation d'un flux de tablettes ayant été compactées par un dispositif de compaction, comprenant les étapes suivantes :
A. récupérer dans une ligne d'entrée un flux de tablettes en sortie d'un dispositif de compaction ;
B. accumuler dans une ligne d'accumulation des tablettes en provenance de la ligne d'entrée ;
C. une fois qu'un nombre déterminé de tablettes a été accumulé dans la ligne d'accumulation :
C1. bloquer les tablettes dans la ligne d'entrée afin de stopper le flux de tablettes entrant dans la ligne d'accumulation ;
C2. démarrer une évacuation forcée des tablettes accumulées de la ligne d'accumulation en direction d'une première ligne de sortie ;
D. une fois que l'évacuation forcée des tablettes de l'étape C2 a démarré, débloquer les tablettes accumulées dans la ligne d'entrée afin qu'elles viennent s'accumuler dans la ligne d'accumulation ;
E. une fois qu'un nombre déterminé de tablettes a été accumulé dans la ligne d'accumulation :
E1. bloquer les tablettes dans la ligne d'entrée afin de stopper le flux de tablettes entrant dans la ligne d'accumulation ;
E2. démarrer une évacuation forcée des tablettes accumulées de la ligne d'accumulation en direction d'une deuxième ligne de sortie ;
F. une fois que l'évacuation forcée des tablettes de l'étape E2 a démarré, débloquer les tablettes accumulées dans la ligne d'entrée afin qu'elles viennent s'accumuler dans la ligne d'accumulation et recommencer les étapes C à F.

16. Procédé selon la revendication 15, dans lequel l'évacuation forcée des étapes C2 et E2 comprend la poussée des tablettes accumulées dans la ligne d'évacuation à une vitesse d'évacuation (V2) supérieure à une vitesse de convoyage (V1) des tablettes dans ligne d'accumulation.
